# EUROPÄISCHE PATENTSCHRIFT

(11) **EP 3 954 929 B1**
(45) Veröffentlichungstag und Bekanntmachung des Hinweises auf die Patenterteilung: **01.05.2024**
(21) Anmeldenummer: 21197767.3
(22) Anmeldetag: 29.03.2019
(51) Int. Cl.: F16K 31/52, F16K 3/02, E21B 41/00

(54) **UNTERSEE-ABSPERRVORRICHTUNG**
SUBMARINE SHUT-OFF DEVICE
DISPOSITIF D'ARRÊT SOUS-MARIN

(30) Priorität: 29.03.2018 DE 102018107644
(43) Veröffentlichungstag der Anmeldung: 16.02.2022
(62) Teilanmeldung aus: 19166314.5
(73) Patentinhaber: WITTENSTEIN SE, 97999 Igersheim (DE)
(72) Erfinder: Glaser, Markus, 73460 Hüttlingen (DE); Schreck, Robert, 97941 Tauberbischofheim-Distelhausen (DE)
(74) Vertreter: Zimmermann & Partner Patentanwälte mbB

(56) Entgegenhaltungen:
- WO-A1-2004/003411
- DE-A1- 2 836 381
- DE-B1- 1 475 903
- GB-A- 709 797
- US-A- 3 143 894
- US-A1- 2008 245 432
- US-A1- 2015 285 036

## Beschreibung

### Gebiet der Erfindung

Die Erfindung betrifft eine Untersee-Absperrvorrichtung, insbesondere zum Sperren von Fluiden in Öl- oder Gas-Förderanlagen.

### Stand der Technik

Aus dem Stand der Technik sind Absperrvorrichtungen für eine Anwendung im Unterseebereich ("subsea") bekannt, welche Aktuatoren zum Betätigen von beispielsweise Ventilen verwenden.

Aus der GB 2551094 A sind Aktuatoren mit Rückstellfedern bekannt. Dabei betätigt der Aktuator eine Vorrichtung in eine erste Richtung und die Rückstellfeder bewegt den Aktuator in die entgegengesetzte Richtung auf die ursprüngliche Position zurück.

Untersee-Absperrvorrichtungen müssen hohe Anforderungen an Sicherheit und an Zuverlässigkeit aufweisen und zugleich eine möglichst kleine Komplexität und einen kleinen Stromverbrauch haben.

Aus der WO 2004 / 003411 A1 ist eine Absperrventilvorrichtung bekannt, welche eine Kurbel und eine Gelenkstange umfasst.

### Offenbarung der Erfindung

Aufgabe der Erfindung ist es, eine Untersee-Absperrvorrichtung bereitzustellen, die zuverlässig, sicher, robust oder einfach aufgebaut ist.

Die Aufgabe wird durch eine Untersee-Absperrvorrichtung nach dem Anspruch 1, einer Verwendung einer Untersee-Absperrvorrichtung und einer Öl- oder Gas-Förderanlage mit einer Untersee-Absperrvorrichtung nach den nebengeordneten Ansprüchen gelöst.

Es wird eine Untersee-Absperrvorrichtung mit einem wasserdichten, ölgefüllten Gehäuse, einem in dem Gehäuse angeordneten Kurbelmechanismus, und einem Rotationsaktuator vorgeschlagen, wobei der Rotationsaktuator eingerichtet ist, einen Absperrschieber eines Ventils über den Kurbelmechanismus zu betätigen.

Im Unterseebereich müssen fluidgefüllte Leitungen, beispielsweise Öl- oder Gas-Förderleitungen zuverlässig geöffnet und geschlossen werden können. Das Öffnen und Schließen geschieht durch ein Ventil, das beispielsweise durch einen Mechanismus und Aktuator betätigt wird.

Die Untersee-Absperrvorrichtung weist ein wasserdichtes, ölgefülltes Gehäuse auf und ist für den Einsatz in Wassertiefen von mehr als 30 Metern (im Folgenden: "m") ausgebildet. Gemäß einem Aspekt kann die Untersee-Absperrvorrichtung für deutlich größere Tiefen und damit deutlich höhere Drücke eingerichtet sein. Beispielsweise kann die Absperrvorrichtung eingerichtet sein, mindestens einem Tiefendruck in 100 m Wassertiefe oder sogar mindestens einem Tiefdruck entsprechend 1000 m, mindestens einem Tiefdruck entsprechend 3000 m oder mindestens einem Tiefdruck entsprechend 6000 m Wassertiefe standzuhalten. Dies ist insbesondere durch das Öl in dem Gehäuse möglich. Durch geringe Verformung des Gehäuses erhöht sich der Druck des praktisch unkomprimierbaren Öls. Der entstehende Gegendruck schützt das Gehäuse vor dem hohen Tiefendruck.

Im Gehäuse ist ein Kurbelmechanismus angeordnet. Der Kurbelmechanismus kann den Absperrschieber eines Ventils betätigen. Durch das Gehäuse ist der Kurbelmechanismus geschützt. Vorteilhaft kann der Kurbelmechanismus einen einfachen mechanischen Aufbau aufweisen, wodurch er zuverlässig ist.

Ein Rotationsaktuator kann den Absperrschieber des Ventils über den Kurbelmechanismus betätigen. Der Rotationsaktuator kann dabei über den Kurbelmechanismus mit dem Absperrschieber verbunden sein, beziehungsweise in Wirkverbindung stehen.

Gemäß einem Aspekt ist das Ventil über den Absperrschieber stufenlos zwischen einem ersten Zustand "offen" und einem zweiten Zustand "geschlossen" betätigbar und betreibbar. Bevorzugt wird das Ventil im Wesentlichen in einem der Zustände "offen" und "geschlossen" betrieben und nicht auf einem Zwischenzustand, wie nachfolgend näher erläutert.

Der Kurbelmechanismus weist ein Schubkurbelgetriebe mit einer Kurbel, einer Schubstange und einer Gelenkstange mit einem ersten und einem zweiten Ende auf.

Dabei ist das erste Ende der Gelenkstange an der Kurbel festgelegt und das zweite Ende der Gelenkstange über ein Gelenk mit der Schubstange verbunden. Die Schubstange ist eingerichtet, den Absperrschieber des Ventils zu betätigen. Bei Drehung der Kurbel durch den Rotationsaktuator wird der Absperrschieber des Ventils betätigt. Der Kurbelmechanismus kann weitere Bestandteile, beispielsweise weitere Gelenke oder Arme aufweisen. Die Schubstange kann gemäß einem Aspekt über ein Gelenk unmittelbar mit der Gelenkstange verbunden sein oder mittelbar durch weitere Bestandteile des Kurbelmechanismus.

Gemäß einer typischen Ausführungsform ist die Kurbel des Kurbelmechanismus eingerichtet keine vollständige Rotation durchzuführen. Die Kurbel weist einen ersten Endanschlag und einen zweiten Endanschlag auf. Dadurch ist eine Rotationsbewegung der Kurbel nur zwischen dem ersten und dem zweiten Endanschlag möglich. Die Bewegung der Kurbel wird dadurch vorhersagbar und der Zustand, also die Position der Gelenkstange, definiert.

Den Endanschlägen können typischerweise definierte Positionen des Absperrschiebers zugeordnet werden. Beispielsweise sperrt der Absperrschieber das Ventil, wenn sich die Gelenkstange an einem ersten Endanschlag befindet, und der Absperrschieber öffnet das Ventil, wenn sich die Gelenkstange an einem zweiten Endanschlag befindet. Wie oben bereits erwähnt weist das Ventil dadurch im Zustand "offen" und "geschlossen" eine definierte und vorhersagbare Position der Gelenkstange, beziehungsweise einen definierten Rotationwinkel für die Kurbel, auf.

Der Kurbelmechanismus weist einen ersten Totpunkt und insbesondere auch einen zweiten Totpunkt auf. Ein Totpunkt kann insbesondere definiert sein als eine Rotationsposition der Kurbel, bei der die Gelenkstange und die Schubstange derart angeordnet sind, dass eine Linearbewegung der Schubstange aus dem Stillstand nicht auf die Kurbel übertragen wird. Insbesondere steht der Kraftvektor der Schubstange dann gemäß einem Aspekt senkrecht auf dem Kurbelmittelpunkt. Das Gelenk zwischen Gelenkstange und Schubstange ist dann gestreckt.

Erfindungsgemäß weist der Kurbelmechanismus einen ersten Totpunkt und/oder einen zweiten Totpunkt auf und der erste Endanschlag ist nahe dem ersten Totpunkt und/oder der zweite Endanschlag ist nahe dem zweiten Totpunkt angeordnet. Vorteilhaft entsteht dadurch durch einfache mechanische Anordnung eine beziehungsweise zwei Positionen der Gelenkstange, in der keine Bewegung der Kurbel durch eine Linearkraft auf die Schubstange erzeugt werden kann. Zur Rotation der Kurbel wird der Rotationsaktuator benötigt. Die Totpunkte bei einem Kurbelmechanismus mit einer kreisförmigen Kurbel und einer Gelenkstange befinden sich bei typischen Ausführungsformen bei 0° und 180°.

Die Endanschläge können nahe und insbesondere hinter den Totpunkten angeordnet sein. Nahe den Totpunkten bedeutet beispielsweise mindestens 1°, mindestens 3° oder mindestens 5°. Nahe den Totpunkten bedeutet typischerweise maximal 40° oder maximal 30°, insbesondere höchstens 20° von den Totpunkten entfernt. Die Abstände der beiden Endanschläge zu den Totpunkten müssen nicht identisch sein.

Erfindungsgemäß definiert der Rotationswinkel zwischen dem ersten Endanschlag und dem zweiten Endanschlag einen maximalen Rotationswinkel für die Kurbel von mehr als 180°. Eine Kraft auf die Schubstange in einem der Endanschläge wird dadurch vom Endanschlag blockiert oder es ist lediglich eine Drehung bis zum nächsten Totpunkt möglich. Für eine Kraftumsetzung in die nicht blockierte Richtung ist die Rotation der Kurbel nötig. Der Absperrschieber des Ventils kann sich dadurch an einem der Endanschläge durch einen Druck auf das Ventil nicht selbst öffnen.

Der Rotationswinkel der Kurbel kann durch den ersten und den zweiten Endanschlag begrenzt sein. Insbesondere kann der Rotationwinkel für die Kurbel auf maximal 240°, insbesondere maximal 220°, begrenzt sein. Die Winkelposition der Kurbel kann beispielsweise durch den Verbindungspunkt mit der Gelenkstange festgelegt sein.

Der Kurbelmechanismus wird durch einen Rotationsaktuator betätigt. Der Rotationsaktuator kann gemäß einer Ausführungsform einen Elektromotor und ein Getriebe, insbesondere ein Zahnradgetriebe, aufweisen. Der Elektromotor treibt das Getriebe an. Das Getriebe kann beispielsweise ein Schneckengetriebe oder ein Planetengetriebe umfassen, das in Wirkverbindung mit der Kurbel oder einem dazugehörigen Kurbelgetriebe steht.

Gemäß einer Ausführungsform sind der Elektromotor und/oder das Getriebe über eine Stirnradstufe mit dem Kurbelmechanismus reversibel verbindbar.

Der Elektromotor, welcher typischerweise ein Elektromotorgehäuse aufweist, kann im ölgefüllten Gehäuse angeordnet sein. Das Getriebe kann auch und unabhängig davon im ölgefüllten Gehäuse angeordnet sein. Wenn das Getriebe nicht im ölgefüllten Gehäuse angeordnet ist, kann die Untersee-Absperrvorrichtung eine abgedichtete Schnittstelle zwischen dem Kurbelmechanismus im Gehäuse und dem Getriebe außerhalb des Gehäuses aufweisen.

Der Elektromotor und das Getriebe sind bei weiteren typischen Ausführungsformen ebenfalls in einem separaten Gehäuse angeordnet, das über eine abgedichtete Schnittstelle mit dem ölgefüllten Gehäuse verbunden ist.

Das ölgefüllte Gehäuse weist bei typischen Ausführungsformen zum Ventil eine abgedichtete Schnittstelle auf. Insbesondere kann die Schubstange durch die abgedichtete Schnittstelle den Absperrschieber des Ventils betätigen oder die Bewegung der Schubstange kann auf andere Weise durch die abgedichtete Schnittstelle auf den Absperrschieber des Ventils übertragen werden.

Die Schubstange führt gemäß einer Ausführungsform eine im Wesentlichen lineare Bewegung, also eine Bewegung mit einem Freiheitsgrad durch. Die Bewegungsrichtung entspricht insbesondere derselben Bewegungsrichtung des Absperrschiebers zum Öffnen und Schließen des Ventils. Der Kurbelmechanismus kann dazu eine Linearführung zum Führen der Schubstange aufweisen, die die Schubstange auf eine im Wesentlichen eindimensionale Bewegung einschränkt.

Die hierin beschriebenen typischen Untersee-Absperrvorrichtungen können beispielsweise zum Steuern des Flusses eines Fluids in einer Rohrleitung verwendet werden. Insbesondere kann die Untersee-Absperrvorrichtung zum Steuern des Flusses von Öl, Gas oder allgemein eines Fluids in einer Öl- oder Gas-Förderanlage in einer Wassertiefe von mindestens 30 m verwendet werden. Vorrichtungen, in welchen Ausführungsformen der Erfindung eingesetzt werden können, umfassen: Subaea trees, Subsea processing, Subsea manifolds, Subsea pumping / compression, Subsea piplines, Subsea High Integrity Pressure Protection Systems (HIPPS) und Subsea Blowout preventer (Bop).

Es wird weiterhin eine Öl- oder Gasförderanlage mit einer der oben beschriebenen Untersee-Absperrvorrichtungen vorgeschlagen.

### Kurze Beschreibung der Zeichnungen

Weitere Vorteile und Merkmale bevorzugter Ausführungsformen der Erfindung werden nachfolgend anhand der beiliegenden Zeichnungen erläutert. Die Zeichnungen sind nicht notwendiger Weise maßstabsgetreu. Vielmehr soll die Funktionsweise der Erfindung schematisch dargestellt werden. Die Figuren zeigen in:
- Fig. 1: eine typische Ausführungsform der Untersee-Absperrvorrichtung,
- Fig. 2: eine weitere Ausführungsform der Untersee-Absperrvorrichtung, und
- Fig. 3: eine Ausführungsform eines Kurbelmechanismus und einen Bewegungsablauf des Kurbelmechanismus.

### Beschreibung bevorzugter Ausführungsbeispiele

Nachfolgend werden typische Ausführungsformen anhand der Figuren beschrieben, wobei die Erfindung nicht auf die Ausführungsbeispiele beschränkt ist, vielmehr wird der Umfang der Erfindung durch die Ansprüche bestimmt.

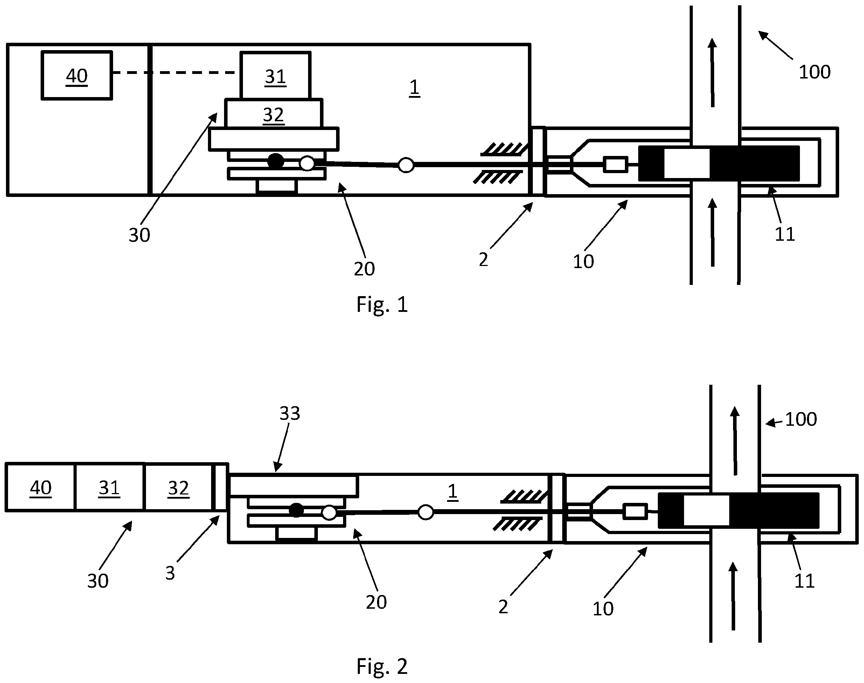

In der Fig. 1 ist eine schematische Ansicht einer Untersee-Absperrvorrichtung an einer Öl- oder Gas-Förderanlage 100 dargestellt. Die Untersee-Absperrvorrichtung weist ein Ventil 10 mit einem Ventilschieber 11 auf, der den Fluss durch die Förderanlage 100 steuert. Der Ventilschieber 11 kann durch einen Rotationsaktuator 30 über einen Kurbelmechanismus 20 betätigt werden.

Der Kurbelmechanismus 20 ist in einem wasserdichten, ölgefüllten Gehäuse 1 angeordnet.

In der Ausführungsform der Fig. 1 weist der Rotationsaktuator 30 einen Elektromotor 31 und ein Getriebe 32 zum Betätigen des Kurbelmechanismus 20 auf. Der Elektromotor 31 kann durch die Motorsteuerung 40 gesteuert werden. Dabei versetzt der Rotationsaktuator 30 eine Kurbel des Kurbelmechanismus 20 in Rotation.

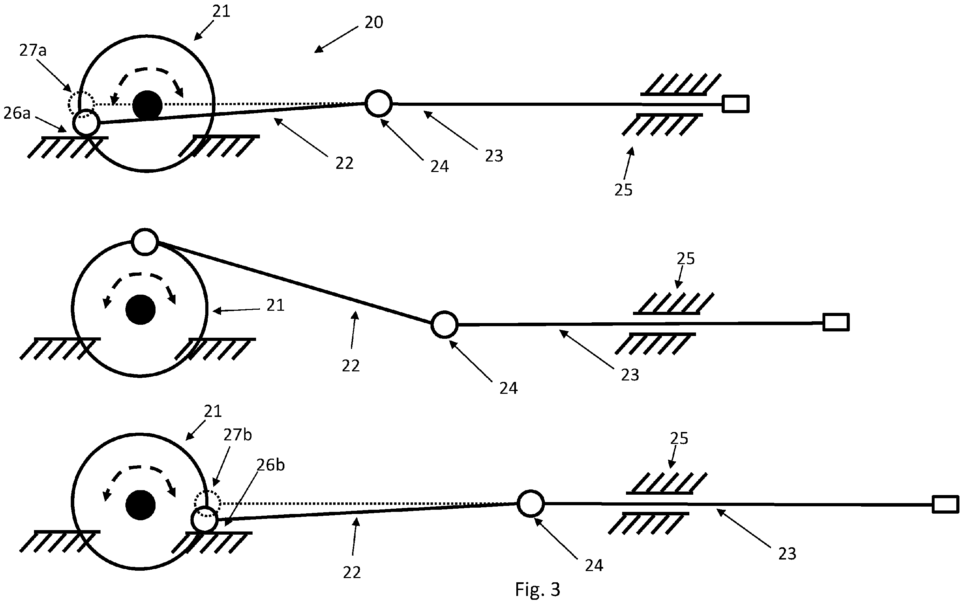

Eine typische Ausführungsform eines Kurbelmechanismus ist im Detail in der Fig. 3 dargestellt.

Der Elektromotor 31 und das Getriebe 32 sind bei der Ausführungsform der Fig. 1 ebenfalls im ölgefüllten Gehäuse 1 angeordnet. Das Gehäuse 1 weist zum Ventil 10 eine abgedichtete Schnittstelle 2 auf. Die Bewegung des Kurbelmechanismus 20 wird durch die abgedichtete Schnittstelle 2 auf den Absperrschieber 11 des Ventils 10 übertragen.

Die Fig. 2 zeigt eine alternative Ausführungsform, bei welcher der Elektromotor 31 und das Getriebe 32 gegenüber dem Gehäuse 1 in einem separaten Gehäuse oder in einzelnen Gehäusen (in Fig. 3 nicht dargestellt) angeordnet sind und mit dem Gehäuse 1 über eine abgedichtete Schnittstelle 3 verbunden sind. Dadurch kann der Rotationsaktuator 30 austauschbar sein, ohne, dass das ölgefüllte Gehäuse 1 geöffnet werden muss.

Bei der Ausführungsform der Fig. 2 ist in dem Gehäuse 1 noch ein Winkelgetriebe 33 angeordnet, um die durch den Rotationsaktuator 30 erzeugbare Rotation um 90° zu drehen, um den Kurbelmechanismus zu betätigen.

Bei weiteren Ausführungsformen ist der Kurbelmechanismus dauerhaft mit dem Ventil verbunden. Solche Ausführungsformen weisen unter Umständen einen einfacheren Aufbau auf, wobei allerdings bei Ausführungsformen mit einer Schnittstelle zwischen Kurbelmechanismus und Ventil ein einfacherer Austausch des Rotationsaktuators mit Kurbelmechanismus möglich ist.

Die Fig. 3 zeigt eine Ausführungsform eines Kurbelmechanismus 20 genauer. Der Kurbelmechanismus der Fig. 3 kann beispielsweise bei der Ausführungsform der Fig. 1 oder der Ausführungsform der Fig. 2 Anwendung finden.

Der Kurbelmechanismus 20 weist ein Schubkurbelgetriebe mit einer Kurbel 21, einer Schubstange 23 und einer Gelenkstange 22 auf. Die Gelenkstange 22 umfasst ein erstes und ein zweites Ende. Das erste Ende der Gelenkstange 22 ist an der Kurbel 21 gelenkig befestigt. Das zweite Ende der Gelenkstange 22 ist über ein Gelenk 24 mit der Schubstange 23 verbunden.

Die Schubstange 23 ist eingerichtet, um einen Absperrschieber 11 eines Ventils 10 (in Fig. 3 nicht dargestellt) zu betätigen. Die Gelenkstange 22 ist mit der Kurbel 21 gelenkig verbunden. Der Kurbelmechanismus kann bei anderen Ausführungsformen auch mehr als zwei Arme oder mehr als zwei Gelenke mit entsprechender Lagerung für die Arme aufweisen.

Der Kurbelmechanismus 20 der Ausführungsform der Fig. 3 weist einen ersten Endanschlag 26a und einen zweiten Endanschlag 26b auf. Eine Bewegung der Kurbel 21 des Kurbelmechanismus ist nur zwischen den beiden Endanschlägen 26a, 26b möglich.

Die obere Darstellung der Fig. 3 zeigt die Position der Kurbel 21 im ersten Endanschlag 26a; die untere Darstellung zeigt die Position der Kurbel 21 im zweiten Endanschlag 26b. Die mittlere Darstellung der Fig. 3 zeigt die Bewegung der Kurbel 21 zwischen den beiden Endanschlägen 26a, 26b.

Jedem Endanschlag 26a, 26b des Kurbelmechanismus 20 ist eine Position des Absperrventils, nämlich "offen" oder "geschlossen", zugeordnet.

Die Streckung des Gelenks 24 auf 180°, so dass die Gelenkstange 22 und Schubstange 23 auf einer Geraden mit dem Drehpunkt der Kurbel 21 liegen, definiert einen Totpunkt. Die beiden Totpunkte 27a, 27b sind gestrichelt dargestellt. In den Totpunkten 27a, 27b kann kein Drehmoment vom abtriebsseitigen Ende der Gelenkstange 22 auf die Kurbel 21 übertragen werden, so dass Kräfte, welche auf den Ventilschieber (nicht in der Fig. 3 gezeigt) wirken, vollständig von dem Drehlager der Kurbel aufgenommen werden.

Die Endanschläge 26a, 26b sind nahe der Totpunkte 27a, 27b angeordnet. Konkret sind bei dem Ausführungsbeispiel der Fig. 3 die Endanschläge 26a und 26b um 20° jeweils "hinter" den Totpunkten 27a, 27b angeordnet, so dass sich ein gesamter möglicher Rotationswinkel der Kurbel 21 von 180° plus 20° plus 20° entsprechend gesamt 220° ergibt.

Der erste Endanschlag kann an der Position nahe bei der Schubstange oder an der entfernten Position bezüglich der Schubstange angeordnet sein. Der zweite Endanschlag ist jeweils an der anderen Position angeordnet.

Wird die Kurbel 21 bei Lage in einem der Endanschläge 26a, 26b durch eine Kraft aus dem Ventilschieber (nicht in der Fig. 3 gezeigt) belastet, so ist gar keine Bewegung, falls die Kraft die Kurbel 21 gegen den jeweiligen Endanschlag 26a, 26b drückt, oder maximal eine Bewegung bis zu dem jeweiligen Totpunkt 27a, 27b möglich.

Die Endanschläge oder das Drehlager der Kurbel nehmen bei Ausführungsformen eventuell auftretende abtriebsseitige Kräfte auf und ein Rückdrehen bzw. eine Bewegung aus einer eingenommenen Position an einem Endanschlag werden erschwert oder verhindert. Dadurch können die Positionen des Absperrschiebers mit einer großen Toleranz sicher angesteuert werden. Des Weiteren ist das Ventil in beiden Positionen energielos gesichert. Druck auf das Ventil durch ein Fluid in der Förderanlage, bspw. einer Pipeline, alleine kann den Ventilschieber nicht betätigen.

Wie in der Fig. 3 dargestellt, sind die Totpunkte 27a, 27b der in der Fig. 3 gezeigten typischen Ausführungsform jeweils gegenüberliegend an der Kurbel 21. Sie sind daher um 180° Rotationswinkel versetzt. Die Endanschläge 26a, 26b sind nahe an den Totpunkten 27a, 27b und hinter den Totpunkten 27a, 27b positioniert. Sie definieren dadurch einen Rotationswinkel der Kurbel 21 von mehr als 180°, insbesondere von mehr als 180° und weniger als 240°, insbesondere maximal 220°.

Ein Totpunkt 27a, 27b ist typischerweise bei dem Ausführungsbeispiel der Fig. 3 erreicht, wenn die Gelenkstange 22 und die Schubstange 23 in einer Linie auf der Kurbel 21 stehen. Die Gelenkstange 22 rotiert an einem Ende mit der Kurbel 21 mit und ist an dem anderen Ende mit der Schubstange 23 gelenkig verbunden.

Die Schubstange kann typischerweise durch eine Linearführung lediglich eine eindimensionale Bewegung ausführen. Die Bewegungsrichtung kann bei Ausführungsformen insbesondere der Bewegungsrichtung des Absperrschiebers entsprechen.

## Patentansprüche

1. Untersee-Absperrvorrichtung für den Einsatz in Wassertiefen von mehr als 30 m, zur Betätigung eines Ventils (10) mit einem Absperrschieber (11), mit
- einem wasserdichten, ölgefüllten Gehäuse (1),
- einem in dem Gehäuse (1) angeordneten Kurbelmechanismus (20), und
- einem Rotationsaktuator (30);
wobei der Rotationsaktuator (30) dazu eingerichtet ist, den Absperrschieber (11) des Ventils (10) über den Kurbelmechanismus (20) zu betätigen,
wobei der Kurbelmechanismus (20) ein Schubkurbelgetriebe mit einer Kurbel (21), einer Schubstange (23) und einer Gelenkstange (22) mit einem ersten und einem zweiten Ende aufweist, wobei das erste Ende der Gelenkstange an der Kurbel (21) festgelegt ist und das zweite Ende der Gelenkstange (22) über ein Gelenk (24) mit der Schubstange (23) verbunden ist und die Schubstange (23) eingerichtet ist, den Absperrschieber (11) des Ventils (10) zu betätigen;
wobei die Kurbel (21) einen ersten Endanschlag (26a) und einen zweiten Endanschlag (26b) aufweist und eine Rotationsbewegung der Kurbel (21) nur zwischen dem ersten und dem zweiten Endanschlag (26a, 26b) möglich ist;
**dadurch gekennzeichnet, dass**
der Kurbelmechanismus einen ersten Totpunkt (27a) und/oder einen zweiten Totpunkt (27b) aufweist und der erste Endanschlag (26a) nahe dem ersten Totpunkt (27a) und/oder der zweite Endanschlag (26b) nahe dem zweiten Totpunkt (27b) angeordnet sind,
wobei der erste Endanschlag (26a) und der zweite Endanschlag (26b) einen maximalen Rotationswinkel für die Kurbel (21) von mehr als 180°, definieren.
sodass eine Kraft auf die Schubstange (23) in einem der Endanschläge (26a, 26b) dadurch vom Endanschlag (26a, 26b) blockiert wird oder lediglich eine Drehung bis zum nächsten Totpunkt (27a, 27b) möglich ist, sodass für eine Kraftumsetzung in die nicht blockierte Richtung eine Rotation der Kurbel (21) nötig ist.

2. Untersee-Absperrvorrichtung nach Anspruch 1, mit einem Ventil (10) und einem Absperrschieber (11), welcher mit dem Rotationsaktuator (30), insbesondere mit der Schubstange (23), verbunden ist.

3. Untersee-Absperrvorrichtung nach Anspruch 1 oder 2, wobei der Absperrschieber (11) das Ventil (10) sperrt, wenn sich die Gelenkstange (22) an einem ersten Endanschlag (26a) befindet, und wobei der Absperrschieber (11) das Ventil (10) öffnet, wenn sich die Gelenkstange (22) an einem zweiten Endanschlag (26b) befindet.

4. Untersee-Absperrvorrichtung nach einem der vorigen Ansprüche, wobei der erste Endanschlag (26a) und der zweite Endanschlag (26b) einen maximalen Rotationwinkel für die Kurbel (21) definieren und der maximale Rotation maximal 240°, insbesondere maximal 220°, beträgt.

5. Untersee-Absperrvorrichtung nach einem der vorigen Ansprüche, wobei der Rotationsaktuator einen Elektromotor (31) und ein Getriebe (32), insbesondere ein Zahnradgetriebe, aufweist.

6. Untersee-Absperrvorrichtung nach Anspruch 5, wobei der Elektromotor (31) und/oder das Getriebe (32) in dem ölgefüllten Gehäuse (1) angeordnet sind.

7. Untersee-Absperrvorrichtung nach einem der vorigen Ansprüche, wobei der Kurbelmechanismus (20) eine Linearführung (25) aufweist, die die Schubstange (23) in einer im Wesentlichen eindimensionalen Bewegung einschränkt.

8. Untersee-Absperrvorrichtung nach einem der vorigen Ansprüche, wobei die Untersee-Absperrvorrichtung eingerichtet ist, mindestens einem Tiefendruck in 1000 m Wassertiefe standzuhalten.

9. Untersee-Absperrvorrichtung nach Anspruch 5 oder 6 oder einem von Anspruch 5 oder 6 abhängigen Anspruch wobei der Elektromotor (31) und/oder das Getriebe (32) über eine Stirnradstufe (33) mit dem Kurbelmechanismus (20) reversibel verbindbar sind.

10. Verwendung einer Untersee-Absperrvorrichtung nach einem der vorhergehenden Ansprüche zum Steuern des Flusses in einer Öl- oder Gasförderanlage in einer Wassertiefe von mindestens 30 m.

11. Öl- oder Gas-Förderanlage, mit einer Untersee-Absperrvorrichtung nach einem der Ansprüche 1 bis 9.

## Claims

1. Subsea shut-off device for use in water depths of more than 30 m, for actuating a valve (10) having a slide gate (11), comprising
- a watertight, oil-filled housing (1),
- a crank mechanism (20) arranged in the housing (1), and
- a rotary actuator (30);
the rotary actuator (30) being designed to actuate the slide gate (11) of the valve (10) via the crank mechanism (20),
the crank mechanism (20) having a slider-crank mechanism which has a crank (21), a push rod (23), and a joint rod (22) having a first and a second end, the first end of the joint rod being fixed to the crank (21), and the second end of the joint rod (22) being connected to the push rod (23) via a joint (24), and the push rod (23) being designed to actuate the slide gate (11) of the valve (10);
the crank (21) having a first end stop (26a) and a second end stop (26b), and a rotational movement of the crank (21) being possible only between the first and the second end stop (26a, 26b);
**characterised in that**
the crank mechanism has a first dead point (27a) and/or a second dead point (27b), and the first end stop (26a) is arranged close to the first dead point (27a) and/or the second end stop (26b) is arranged close to the second dead point (27b),
the first end stop (26a) and the second end stop (26b) defining a maximum rotation angle for the crank (21) of more than 180°,
so that a force on the push rod (23) in one of the end stops (26a, 26b) is thus blocked by the end stop (26a, 26b), or only a rotation to the next dead point (27a, 27b) is possible, so that a rotation of the crank (21) is necessary for a force conversion into the non-blocked direction.

2. Subsea shut-off device according to claim 1, comprising a valve (10) and a slide gate (11) which is connected to the rotary actuator (30), in particular to the push rod (23).

3. Subsea shut-off device according to either claim 1 or claim 2, wherein the slide gate (11) blocks the valve (10) when the joint rod (22) is located at a first end stop (26a), and wherein the slide gate (11) opens the valve (10) when the joint rod (22) is located at a second end stop (26b).

4. Subsea shut-off device according to any of the preceding claims, wherein the first end stop (26a) and the second end stop (26b) define a maximum rotation angle for the crank (21) and the maximum rotation is at most 240°, in particular at most 220°.

5. Subsea shut-off device according to any of the preceding claims, wherein the rotary actuator has an electric motor (31) and a transmission (32), in particular a gear transmission.

6. Subsea shut-off device according to claim 5, wherein the electric motor (31) and/or the transmission (32) are arranged in the oil-filled housing (1).

7. Subsea shut-off device according to any of the preceding claims, wherein the crank mechanism (20) has a linear guide (25) which limits the push rod (23) to a substantially one-dimensional movement.

8. Subsea shut-off device according to any of the preceding claims, wherein the subsea shut-off device is designed to withstand at least a depth pressure at a water depth of 1000 m.

9. Subsea shut-off device according to either claim 5 or claim 6 or any claim dependent on either claim 5 or claim 6,
wherein the electric motor (31) and/or the transmission (32) can be reversibly connected to the crank mechanism (20) via a spur gear stage (33).

10. Use of a subsea shut-off device according to any of the preceding claims for controlling flow in an oil or gas conveying system in a water depth of at least 30 m.

11. Oil or gas conveying system, comprising a subsea shut-off device according to any of claims 1 to 9.

## Revendications

1. Dispositif d'arrêt sous-marin destiné à être utilisé à des profondeurs d'eau supérieures à 30 m, pour l'actionnement d'une soupape (10) comportant une vanne d'arrêt (11), comportant
- un boîtier (1) rempli d'huile et étanche à l'eau,
- un mécanisme à manivelle (20) disposé dans le boîtier (1), et
- un actionneur rotatif (30) ;
dans lequel l'actionneur rotatif (30) est conçu pour actionner la vanne d'arrêt (11) de la soupape (10) par l'intermédiaire du mécanisme à manivelle (20),
dans lequel le mécanisme à manivelle (20) présente une transmission bielle-manivelle comportant une manivelle (21), une bielle (23) et une tige articulée (22) comportant une première et une seconde extrémité, dans lequel la première extrémité de la tige articulée est fixée à la manivelle (21) et la seconde extrémité de la tige articulée (22) est reliée à la bielle (23) par l'intermédiaire d'une articulation (24) et la bielle (23) est conçue pour actionner la vanne d'arrêt (11) de la soupape (10) ;
dans lequel la manivelle (21) présente une première butée de fin de course (26a) et une seconde butée de fin de course (26b) et un mouvement de rotation de la manivelle (21) n'est possible qu'entre la première et la seconde butée de fin de course (26a, 26b) ;
**caractérisé en ce que**
le mécanisme à manivelle présente un premier point mort (27a) et/ou un second point mort (27b) et la première butée de fin de course (26a) est disposée à proximité du premier point mort (27a) et/ou la seconde butée de fin de course (26b) est disposée à proximité du second point mort (27b),
dans lequel la première butée de fin de course (26a) et la seconde butée de fin de course (26b) définissent un angle de rotation maximal pour la manivelle (21) qui est supérieur à 180°,
de sorte qu'une force exercée sur la bielle (23) dans l'une des butées de fin de course (26a, 26b) est ainsi bloquée par la butée de fin de course (26a, 26b) ou seule une rotation jusqu'au point mort (27a, 27b) suivant est possible, de sorte qu'une rotation de la manivelle (21) est nécessaire pour une conversion de force dans la direction non bloquée.

2. Dispositif d'arrêt sous-marin selon la revendication 1, comportant une soupape (10) et une vanne d'arrêt (11), laquelle vanne d'arrêt est reliée à l'actionneur rotatif (30), en particulier à la bielle (23).

3. Dispositif d'arrêt sous-marin selon la revendication 1 ou 2, dans lequel la vanne d'arrêt (11) arrête la soupape (10) lorsque la tige articulée (22) se situe au niveau d'une première butée de fin de course (26a), et dans lequel la vanne d'arrêt (11) ouvre la soupape (10) lorsque la tige articulée (22) se situe au niveau d'une seconde butée de fin de course (26b).

4. Dispositif d'arrêt sous-marin selon l'une des revendications précédentes, dans lequel la première butée de fin de course (26a) et la seconde butée de fin de course (26b) définissent un angle de rotation maximal pour la manivelle (21) et la rotation maximale est de 240° au maximum, en particulier de 220° au maximum.

5. Dispositif d'arrêt sous-marin selon l'une des revendications précédentes, dans lequel l'actionneur rotatif présente un moteur électrique (31) et une transmission (32), en particulier une transmission par engrenages.

6. Dispositif d'arrêt sous-marin selon la revendication 5, dans lequel le moteur électrique (31) et/ou la transmission (32) sont disposés dans le boîtier (1) rempli d'huile.

7. Dispositif d'arrêt sous-marin selon l'une des revendications précédentes, dans lequel le mécanisme à manivelle (20) présente un guide linéaire (25) qui restreint la bielle (23) dans un mouvement sensiblement unidimensionnel.

8. Dispositif d'arrêt sous-marin selon l'une des revendications précédentes, dans lequel le dispositif d'arrêt sous-marin est conçu pour résister à une pression en profondeur d'eau d'au moins 1 000 m.

9. Dispositif d'arrêt sous-marin selon la revendication 5 ou 6 ou une revendication dépendante de la revendication 5 ou 6, dans lequel le moteur électrique (31) et/ou la transmission (32) peuvent être reliés de manière réversible au mécanisme à manivelle (20) par l'intermédiaire d'un étage d'engrenage droit (33).

10. Utilisation d'un dispositif d'arrêt sous-marin selon l'une des revendications précédentes pour la commande du débit dans une installation de production de pétrole ou de gaz dans une profondeur d'eau d'au moins 30 m.

11. Installation de production de pétrole ou de gaz, comportant un dispositif d'arrêt sous-marin selon l'une des revendications 1 à 9.
